(19) Europäisches Patentamt
European Patent Office
Office européen des brevets

(11) Publication number : **0 524 730 A1**

# (12) EUROPEAN PATENT APPLICATION

(21) Application number : **92305884.6**

(22) Date of filing : **25.06.92**

(51) Int. Cl.$^5$ : **C08L 83/10,** C08L 69/00, C08K 3/36, // (C08L83/10, 27:18), (C08L69/00, 83:10, 27:18)

(30) Priority : **01.07.91 US 724021**

(43) Date of publication of application :
**27.01.93 Bulletin 93/04**

(84) Designated Contracting States :
**DE FR GB IT NL**

(71) Applicant : **GENERAL ELECTRIC COMPANY**
**1 River Road**
**Schenectady, NY 12345 (US)**

(72) Inventor : **Hawkins, Christopher Michael**
**3800 Raccoon Valley Road**
**Alexandria, OH 43001-9744 (US)**
Inventor : **Davis, Gary Charles**
**5 Felicia Court**
**Albany, New York 12205 (US)**

(74) Representative : **Pratt, Richard Wilson et al**
**London Patent Operation G.E. Technical Services Co. Inc. Essex House 12/13 Essex Street**
**London WC2R 3AA (GB)**

(54) **Flame retardant high impact silicone-polycarbonate copolymer blends.**

(57) Flame retardant silicone-polycarbonate blends are provided utilizing fumed silica and polytetrafluoroethylene resin. The silicone-polycarbonate flame retardant blends can be further blended with polycarbonate resin and retain high impact strength at low temperatures, such as -20°C or below.

EP 0 524 730 A1

## Cross Reference to Related Application

Reference is made to copending application RD-21,068, filed concurrently herewith and assigned to the same assignee as the present invention.

## Background of the Invention

The present invention relates to flame retardant blends of polytetrafluoroethylene, fumed silica and silicone-polycarbonate copolymers which can be further blended with polycarbonate resin. More particularly, the present invention relates to the use of fumed silica and polytetrafluoroethylene with silicone-polycarbonate copolymers to provide flame retardant polycarbonates exhibiting high impact strength at temperatures of about -20°C or below.

There are shown by Vaughn, U.S. Patent 3,189,662, organopolysiloxane-polycarbonate block copolymers which are useful as surface covering for appliances, insulation, coatings for rods and wires and binding material for parts and laminates which is incorporated herein by reference. Krishnan et al, U.S. Patent 4,772,655, shows that polycarbonate compositions comprising a thermoplastic aromatic polycarbonate, a flame retardant agent such as cryolite, polytetrafluoroethylene and an effective amount of a finely divided hydrophobic silicon dioxide can be used as flame resistant polycarbonate compositions. In Offenlegungsschrift DE3906919 A1 Fire-Resistant Block Polycarbonate - Siloxane Blends, there are shown polydiorganosiloxane-polycarbonate block copolymers blended with polytetrafluoroethylene and at least one alkali metal or alkaline earth metal halide such as cryolite. Although alkaline earth metal halides such as cryolite have been found to impart flame retardance to polycarbonate compositions, experience has shown that in particular instances, these alkali metal halides can effect depolymerization.

As used hereinafter, the term "flame retardance" or "nonflammable" with respect to the flame retardant polycarbonate compositions of the present invention means that the flame retardant polycarbonates have satisfied UL94 V-O requirements for flammability as shown by the "Flammability of Plastic Materials Bulletin of Jan. 24, 1980. More particularly, a 5″ x 1/2″ x 1/16″ test sample is suspended vertically over a 3/4″ Bunsen Burner flame as provided in the aforementioned UL94 test. The test sample preferably exhibits a UL94 V-O rating which includes the following criteria:

A. Not have any specimen which burns with flaming combustion for more than 10 seconds after application of the test flame.

B. Not have a total flaming combustion time exceeding 50 seconds for 10 flame applications of each set of five specimens.

C. Not have any specimens which burn with flaming or glowing combustion up to the holding clamp.

D. Not have any specimens which drip flaming particules that ignite dry absorbent surgical cotton located 12 inches (305 mm) below the test specimen.

E. Not have any specimens with glowing combustion which persists for more than 30 seconds after the second removal of the test flame.

## Summary of the Invention

The present invention is based on a discovery that silicone-polycarbonate block copolymers, or blends thereof with polycarbonate resin, as defined hereinafter, can be converted to flame retardant thermoplastic blends exhibiting high impact values at temperatures of about -20°C or below, if the silicone-polycarbonate copolymer is blended with effective amounts of fumed silica and polytetrafluoroethylene.

## Statement of the Invention

There is provided by the present invention, flame retardant silicone-polycarbonate blends substantially free of alkali metal or alkaline earth metal salts of fluorine containing acids comprising by weight,

(A) 100 parts of a silicone-polycarbonate material comprising from 0.1 to 50% by weight of chemically combined polydiorganosiloxane and having from 4 to 200 condensed diorganosiloxy units, which silicone-polycarbonate material is a member selected from the class consisting of,

(i) a silicone-polycarbonate copolymer, and

(ii) a blend of (i) and polycarbonate where (i) is present at from about 2% to about 99.8% by weight of the blend, and the silicone content of (1) and the polycarbonate is from 0.1% to 50% by weight of the blend,

(B) 0.1 to 10 parts of fumed silica and,

(C) 0.01 to 5 parts of polytetrafluoroethylene, where the organo radicals of the polydiorganosiloxane of (A) are selected from $C_{(1-13)}$ organo radicals which are attached to silicon by carbon-silicon linkages, and the polycarbonate of (ii) consists essentially of recurring carbonate units of the formula,

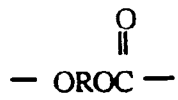

where R is a $C_{(6-25)}$ aromatic organic radical.

Among the aromatic polycarbonates which can be used in the practice of the present invention are aromatic polycarbonates formed by phosgenating at least one of the following bisphenols: p,p'-bisphenol A, m,p-bisphenol A, o,p-bisphenol A, spirobiindane bisphenol, tetramethylbisphenol A and tetramethylbiphenol. Copolycarbonates containing the aforementioned bisphenols as major bisphenol constitutents are also included. Preferably, the polycarbonate is a bisphenol A polycarbonate having an intrinsic viscosity (IV) of from 0.35 to 1.8 dl/g in chloroform at 25°C.

Additional polycarbonates and methods for making which are incorporated herein by reference, can be found in Schnell, et al, U.S. Pat. No. 3,028,365; Idel et al U.S. Pat.No. 4,185,009; Evans, et al, U.S. Pat. No. 4,605,731; Evans, et al, U.S. Pat.No. 4,701,519; and Brunelle et al, U.S. Pat No. 4,727,134. In addition Kirk-Othmer, 3rd Edition,Vol. 18, pages 479-494, shows additional procedures.

Silicone-polycarbonate block copolymers which can be used in the practice of the present invention can be made by the method of Evans et al, U.S. Pat.No. 4,920,183 assigned to the same assignee as the present invention and incorporated herein by reference. In the method of Evans et al, a hydroxyl terminated polycarbonate oligomer is condensed with a halo terminated polydiorganosiloxane in the presence of an acid acceptor. An additional procedure for making silicone-polycarbonate block copolymers is shown by the aforementioned Vaughn patent. It involves the phosgenation of a mixture of a dihydric phenol, such as bisphenol A, and a phenol terminated polydiorganosiloxane, such as a bisphenol A terminated polydimethylsiloxane. In addition, phenol terminated polydiorganosiloxane having terminal phenol groups joined to silicon through divalent organo radicals by carbon-silicon linkages, such as polymers having terminal eugenol groups, or other aliphatically unsaturated phenol groups as shown by Vaughn, U.S. patent 3,419,634, can be used.

Although the polydiorganosiloxane blocks are preferably polydimethylsiloxane, polydiorganosiloxane consisting of a mixture of condensed dimethylsiloxy units, and units such as diphenylsiloxy, methylphenylsiloxy, methylvinylsiloxy, or mixtures thereof, also can be used.

Suitable dihydric phenols which can be used in the practice of the present invention to make the polycarbonates and silicone-polycarbonate block copolymers are, for example, 2,2-bis(2,-hydroxyphenyl)propane, 2,4'-dihydroxybiphenylmethane, bis-(2-hydroxyphenyl)methane, 2,2-bis-(4-hydroxyphenyl)propane, referred to hereinafter as "bisphenol A" or "BPA", 1,1-bis(4-hydroxyphenyl)ethane, 1,1-bis (4-hydroxyphenyl)propane, 4,4'-dihydroxybiphenyl, 4,4'-dihydroxy-3,3',5,5'-tetramethylbiphenyl, 2,4-dihydroxybenzophenone, 4,4'-dihydroxydiphenylsulfone, 2,4'-dihydroxydiphenylsulfone, 4,4'-dihydroxydiphenylsulfoxide, 4,4'-dihydroxydiphenylsulfide, 1,1-dichloro-2,2-bis(4-hydroxyphenyl)ethylene, 6,6'-dihydroxy-3,3,3',3'-tetramethyl-bis-1,1'-spirobiindane,

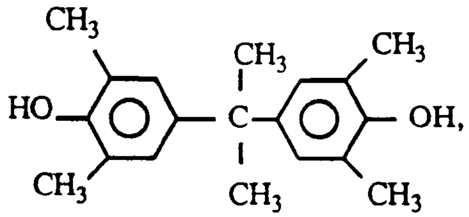

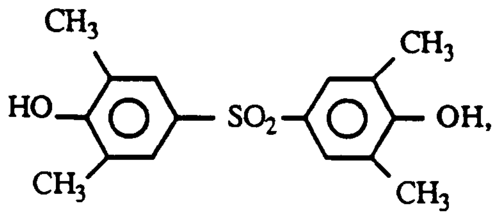

and

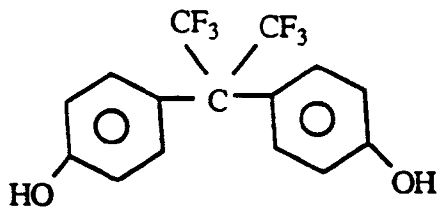

Fumed silica utilized in the practice of the present invention is preferably treated with octamethylcyclotetrasiloxane and/or silazane. Suitable silazanes are taught by Martellock, U.S. Pat. No. 3,243,404.

In order that those skilled in the art will be better able to practice the present invention the following example is given by way illustration and not by way of limitation. All parts are by weight.

Example 1

In accordance with the procedure of Vaughn, U.S. Pat. No. 3,189,662, incorporated herein by reference, several silicone-polycarbonate block copolymers having a weight % siloxane in the range of about 4 to 5% by weight and a siloxane block length in the range of from about 10 to 30 were prepared. There was phosgenated a mixture of a bisphenol A terminated polydimethylsiloxane made in accordance with procedures shown in the Vaughn patent and bisphenol A.

Blends of the silicone-polycarbonate block copolymers were made by adding polytetrafluoroethylene and fumed silica which had been treated with octamethylcyclotetrasiloxane followed by hexamethyldisilazane. The resulting blends were extruded and injection molded to produce 1/16" test samples and tested for flame retardance in accordance with UL94 V-O requirements. In addition to the silicone-polycarbonate block copolymers, test bars made from Lexan® polycarbonate, a product of GE Plastics, were also evaluated.

In addition to testing for UL94 V-O, the silicone-polycarbonate test bars were evaluated for Izod impact at -20°C. The following results were obtained where control is Lexan® polycarbonate Teflon®* resin is shown as polytetrafluoroethylene and PC/PDMS is silicone-polycarbonate block copolymer, and "KI" is melt index:

| Resin Description | Control | Control | PC/ PDMS | PC/ PDMS | PC/ PDMS |
|---|---|---|---|---|---|
| phr polytetrafluoroethylene | | 0.2 | 0.2 | 0.2 | 0.2 |
| phr fumed silica | | 1.0 | 1.0 | 1.0 | 1.0 |
| Siloxane (Wt %) | --- | --- | 4.5 | 4.3 | 4.5 |
| Siloxane Block Length | --- | --- | 10 | 30 | 30 |
| UL94 Rating (1/16") | V2 | VO | VO | VO | V1 |
| IZOD (-20°C) | 2.5 | 2.1 | 11.9 | 14.1 | 9.2 |
| KI | 3300 | 3300 | 6620 | 10110 | 2230 |

*TM of E.I. Dupont de Nemours Co.

Example 2

In accordance with the procedure of Example 1, additional silicone-polycarbonate block copolymers were prepared having an average of about 43% by weight of polydimethylsiloxane with block sizes having an average of about 10 polydimethylsiloxy units. Blends were prepared with these block copolymers with polytetrafluoroethylene resin, fumed silica, and Lexan® polycarbonate. The blends were converted to test samples as described in Example 1 and evaluated for UL94 V-O as well as Izod impact at -20°C. The following results were obtained:

| | | | |
|---|---|---|---|
| phr polycarbonate | 100 | 89.4 | 53.6 |
| phr silicone-polycarbonate | --- | 11.6 | 46.5 |
| phr polytetrafluoroethylene | --- | 0.2 | 0.2 |
| phr Fumed Silica | --- | 1.0 | 1.0 |
| Siloxane (Wt %) | --- | 5 | 20 |
| Siloxane Block Length | --- | 10 | 10 |
| UL94 Rating (1/16") | V2 | VO | VO |
| IZOD (-20°C) | 2.5 | 4.9 | 12.0 |

The results shown in the above tables indicate that optimum flame retardance can be obtained with silicone-polycarbonate blends if effective amounts of polytetrafluoroethylene resin and fumed silica are utilized. In addition, low temperature impact is optimized in instances where silicone-polycarbonate copolymer is utilized in proportions of at least about equal parts by weight when employed in combination with polycarbonate resin.

Example 3

Several silicone-polycarbonate block copolymers were prepared having a weight % siloxane in the range of from 0.1% to 2.5% by weight. In a typical procedure, a silicone polycarbonate copolymer was prepared by interfacially phosgenating a mixture of 2280 g of bisphenol A, 58.7 g of bisphenol A capped dimethylsiloxane having an average block length of about 10 dimethylsiloxy units, 74.2 g of p-cumylphenol chainstopper, 14 mL of triethylamine in 11 L of methylene chloride and 7 L of water. 1360 g of phosgene was added over a 40 minute period. The phases were separated and the polymer solution diluted with 8L of methylene chloride. The solution was washed twice with 10 L of 0.3N aqueous HCl followed by 4 times with water. The polymer solution was precipitated into 40 L of methanol in a Henschel mixer. The polymer was dried at 120°C. The polymer was found to have a Mw of 47800, a Mn of 17200 and a siloxane incorporation of 1 weight %. The polymer powder was blended with fumed silica at 1 weight % level and polytetrafluoroethylene resin at 0.2 weight % level. The polymer blend was converted into 1/16" flame bars. These bars were found to be V-O under UL-94 test conditions.

Although the above examples are directed to only a few of the very many variables which can be employed in the practice of the present invention, it should be understood that a much broader variety of silicone-polycarbonate copolymers and blends thereof with polycarbonate resin can be used as set forth in the description preceding these examples.

## Claims

1. A flame retardant silicone-polycarbonate blend comprising by weight,
   (A) 100 parts of a silicone-polycarbonate material comprising from 0.1% to 50% by weight of chemically combined polydiorganosiloxane having from 4 to 200 condensed diorganosiloxy units, which silicone-polycarbonate material is a member selected from the class consisting of,
      (i) a silicone-polycarbonate copolymer, and
      (ii) a blend of (i) and polycarbonate, where (i) is present at from about 2% to about 99.8% by weight of the blend, and the silicone content of (1) and the polycarbonate is from 0.1% to 50% by weight of the blend,
   (B) 0.1 to 10 parts of fumed silica and,
   (C) 0.01 to 5 parts of polytetrafluoroethylene, where the organo radicals of the polydiorganosiloxane of (A) are selected from $C_{(1-13)}$ organo radicals which are attached to silicon by carbon-silicon linkages and the polycarbonate of (ii) consists essentially of recurring carbonate units of the formula,

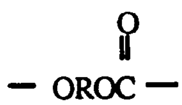

   where R is a $C_{(6-25)}$ aromatic organic radical.

2. A flame retardant silicone-polycarbonate blend in accordance with claim 1, where the polycarbonate is a bisphenol A polycarbonate.

3. A flame retardant silicone-polycarbonate blend in accordance with claim 1 or Claim 2, where the polydiorganosiloxane is a polydimethylsiloxane.

European Patent Office

# EUROPEAN SEARCH REPORT

Application Number
EP 92 30 5884

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 382 004 (BAYER AG)<br>* page 3, line 43 - line 47; claims 1-5 *<br>* page 5, line 22 - line 33 * | 1-3 | C08L83/10<br>C08L69/00<br>C08K3/36<br>//(C08L83/10,27:18)<br>(C08L69/00,83:10,27:18) |
| A | US-A-4 767 818 (O. M. BOUTNI)<br>* column 8, line 37 - line 57; claims 1-3,6,7 * | 1-3 | |
| D,A | EP-A-0 386 511 (BAYER AG)<br>* page 5, line 35 - line 48; claims 1-5 * | 1-3 | |

TECHNICAL FIELDS SEARCHED (Int. Cl.5 )
C08L
C08K

The present search report has been drawn up for all claims

| Place of search | Date of completion of the search | Examiner |
|---|---|---|
| THE HAGUE | 03 SEPTEMBER 1992 | KANETAKIS I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)